# EUROPEAN PATENT APPLICATION

(11) **EP 1 647 327 A1**
(43) Date of publication of application: **19.04.2006**
(21) Application number: 05000925.7
(22) Date of filing: 18.01.2005
(51) Int. Cl.: B01J 19/00

(54) **Chemical reaction apparatus**

(30) Priority: 18.10.2004 JP 2004303227
(71) Applicant: HITACHI SOFTWARE ENGINEERING CO., LTD., Yokohama-shi, Kanagawa 230-0045 (JP)
(72) Inventor: Kohara, Yoshinobu, c/o Hitachi, Ltd., Chiyoda-ku, Tokyo 100-8220 (JP); Noda, Hideyuki, c/o Hitachi, Ltd., Chiyoda-ku, Tokyo 100-8220 (JP)
(74) Representative: Strehl Schübel-Hopf & Partner

(57) **Abstract**

Provided are a chemical reaction device (102) and a chemical reaction apparatus capable of performing transverse liquid movement in a simple structure and at low cost without causing contamination and air bubbles. A mechanism supports the chemical reaction device (102) in a position other than the center of a turntable (100), which can be rotated for moving liquid by centrifugal force due to rotation. The direction of the flow path (112) can be reversed independently of the turntable (100).

## Description

### CLAIM OF PRIORITY

The present application claims priority from Japanese application JP 2004-303227 filed on October 18, 2004, the content of which is hereby incorporated by reference into this application.

### FIELD OF THE INVENTION

The present invention relates to a chemical reaction device and a chemical reaction apparatus, and more particularly to a chemical reaction device and a chemical reaction apparatus characterized by a liquid movement method.

### BACKGROUND OF THE INVENTION

As a technique of bead array, there is JP-A No. 243997/1999, but it describes only the basic technique, and does not describe a liquid movement method for performing a hybridization reaction. An example in which a syringe pump is used in order to perform one-way and transverse liquid movement to the bead array from the outside has been described in Nucleic Acids Research, Vol.30, No. 16, e87(2002) and Analytical Chemistry, Vol.75, No. 13, 3079-3085 (2003).

Even for a general microfluid device, when liquid movement is performed from the outside as in the case with the bead array, there have been many examples in which a syringe pump is used. As an example in which a liquid movement mechanism is provided within the microfluid device, there are a micropump using a diaphragm, a micropump for generating gas by electrolizing water, a micropump for using an electro-osmotic flow, and the like. As an example between both, an example in which a microfluid device is rotated from the outside to perform liquid movement by a centrifugal force has been described in U.S. Patent No. 6,653,625. In this example, solution is moved at least in a part of a fine flow path using the centrifugal force. Also, in U.S. Patent No. 6,717,136, there has been described a disk provided with a plurality of fine flow paths radially around the rotating shaft. In any of these cases, the structure is arranged such that a direction of the flow path is fixed toward the direction of the centrifugal force, and that solution is moved in one direction through a part of the flow path only once. In other words, changing a direction of the flow path or transverse liquid movement has not been supposed.
[Patent document 1] JP-A No. 243997/1999
[Patent document 2] U.S. Patent No. 6,653,625
[Patent document 3] U.S. Patent No. 6,717,136
[Non-patent document 1] Nucleic Acids Research, Vol.30, No. 16, e87 (2002)
[Non-patent document 2] Analytical Chemistry, Vol.75, No. 13, 3079-3085 (2003)

### SUMMARY OF THE INVENTION

In a method for performing liquid movement by coming into contact with liquid, which becomes a sample, from the outside like a syringe pump, when the sample is changed, its ingredient interferes or becomes turbid, whereby a problem of contamination easily occurs. When analyzing particularly biomolecule using a chemical reaction device and a chemical analysis device (hereinafter, generically referred to as chemical reaction device) including the bead array, contamination impairs precision and reliability of the result, and becomes a serious problem. Also, particularly, in liquid movement by the syringe pump, when moving liquid of plural types, mixing is frequently prevented by setting an air gap in the course, but evolution of air bubbles resulting from the air gap easily occurs to hinder stability of a chemical reaction. Similarly, in transverse liquid movement by the syringe pump, since a process of drawing the piston of the syringe is caused, a negative pressure of the atmospheric pressure or less is applied on the solution, and gas that has been solved in the solution easily develops into air bubbles. These air bubbles also hinder stability and reproducibility of the chemical reaction.

The microfluid device having a liquid movement mechanism within has a problem that it is expensive because it uses a special bulb, valve or electrode. Particularly, in order to enable transverse liquid movement, complicated structure becomes necessary. The microfluid device which uses a liquid movement method using a centrifugal force due to rotation has a problem that the liquid passes through a reaction portion only once because the centrifugal force works only in one direction of the device. In the chemical reaction device including the bead array, it is possible to raise the reaction efficiency by circulating the same solution in the reaction portion within the device plural numbers of times, and for this reason, transverse liquid movement is performed, but in a microfluid device using the liquid movement method using this centrifugal force, transverse liquid movement was impossible.

It is an object of the present invention to provide a chemical reaction device and a chemical reaction apparatus capable of transverses liquid movement in simple structure and at low cost without causing contamination and air bubbles.

In a chemical reaction apparatus and a chemical analysis apparatus (hereinafter, generically referred to as chemical reaction apparatus) which use a chemical reaction device including the bead array, there is set a mechanism for supporting the device in any other position than a center of a turntable which can be rotated, and for reversing a direction of the device independently of the turntable. By using this method, it is possible to repeatedly flow the same liquid through the flow path by reversing a direction of the device even after the liquid has been flowed through the flow path within the device once by the centrifugal force due to rotation.

According to the present invention, the same liquid can be repeatedly flowed through a flow path of the chemical reaction device. Since the apparatus does not come into direct contact with the liquid concerning liquid movement, the apparatus under dry environment can be realized, and even if the ingredient of the liquid may be changed, the respective liquid will not interfere with, but if the device is used only once and then is thrown away, it will become possible to completely prevent contamination. Also, by realizing transverses liquid movement due to pressurization of the centrifugal force, it is possible to provide a liquid movement method having high reproducibility without deteriorating the efficiency of chemical reaction. Also, since transverses liquid movement can be performed without any special bulb, valve or electrode, it is possible to provide a chemical reaction apparatus using a chemical reaction device including bead array which can be manufactured simply at low cost.

### BRIEF DESCRIPTION OF THE DRAWINGS

Fig. 1 is a schematic view showing an example of the present invention as a whole;
Figs. 2(1)A and 2(1)B are schematic views showing a chemical reaction device to be used for the example of the present invention;
Figs. 2(2)A to 2(2)D are schematic views showing a chemical reaction device to be used for the example of the present invention;
Figs. 3(1)A to 3(1)C are schematic views showing a liquid movement procedure according to the example of the present invention;
Figs. 3(2)D to 3(2)F are schematic views showing a liquid movement procedure according to the example of the present invention;
Fig. 4 is a schematic view showing an example of a mechanism for rotating the chemical reaction device;
Fig. 5 is a schematic view showing another example of a mechanism for rotating the chemical reaction device;
Fig. 6 is a view showing comparison between an analysis result in an example of the present invention and an analysis result by a conventional method;
Fig. 7 is a schematic view showing an example when a direction of a flow path of the chemical reaction device and a segment of a line for connecting the chemical reaction device to a center of the turntable do not coincide with each other;
Fig. 8 is a schematic view showing an example of a mechanism for rotating the chemical reaction device;
Fig. 9 is a schematic view showing an example of a mechanism for changing a distance between the chemical reaction device and a center of the turntable;
Fig. 10 is a schematic view showing an example of a mechanism for moving the chemical reaction device;
Fig. 11 is a schematic view showing an example of the present invention as a whole; and
Fig. 12 is a schematic view showing an example of the present invention as a whole.

### DETAILED DESCRIPTION OF THE PREFERRED EMBODIMENTS

Hereinafter, with reference to the drawings, the description will be made of embodiments of the present invention.

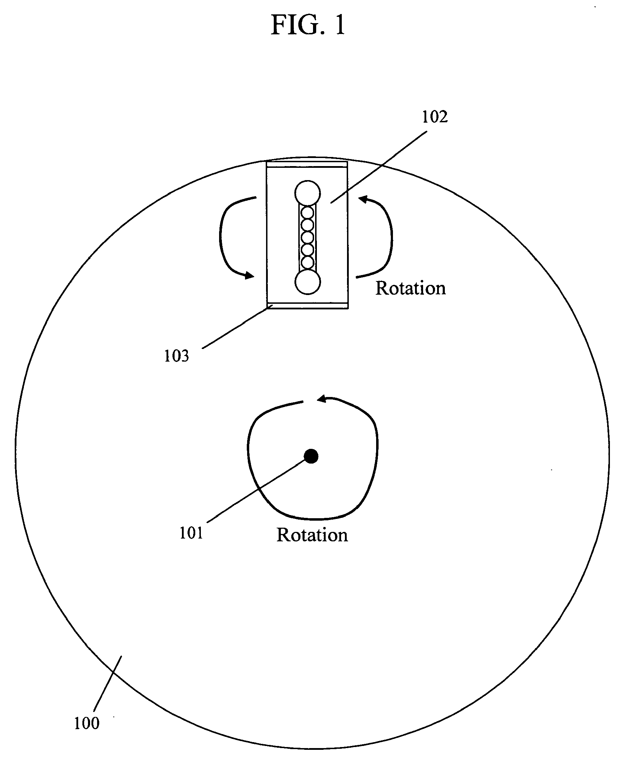

Fig. 1 is a schematic view showing general structure of a first example of the present invention. On a device holding unit 103 on a turntable 100 rotatable with a rotating shaft 101 as a center, a bead array device 102, which is one of the chemical reaction devices, is detachably installed. A device holding unit 103 provided with the bead array device 102 is located in a position apart from the rotating shaft 101 in such a manner that a centrifugal force generated by the turntable 100 rotating around the rotating shaft 101 is exerted on the bead array device 102. Since it is subjected to an outwardly facing force by this centrifugal force, the solution that has entered the bead array device 102 is moved in the outside along the flow path. This bead array device 102 is rotated by the device holding unit 103 by a mechanism to be described later, whereby the flow path within the bead array device 102 can be actually reversed. The turntable 100 is rotated in a state in which the bead array device 102 has been reversed, whereby it is possible to exert a centrifugal force on the bead array device 102 again, and the liquid within can be moved outwards. Trough these series of processes, the solution within the bead array device 102 can be transversely moved.

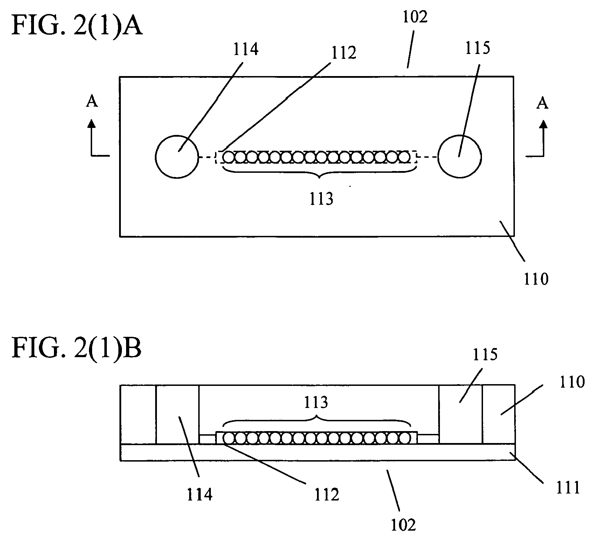

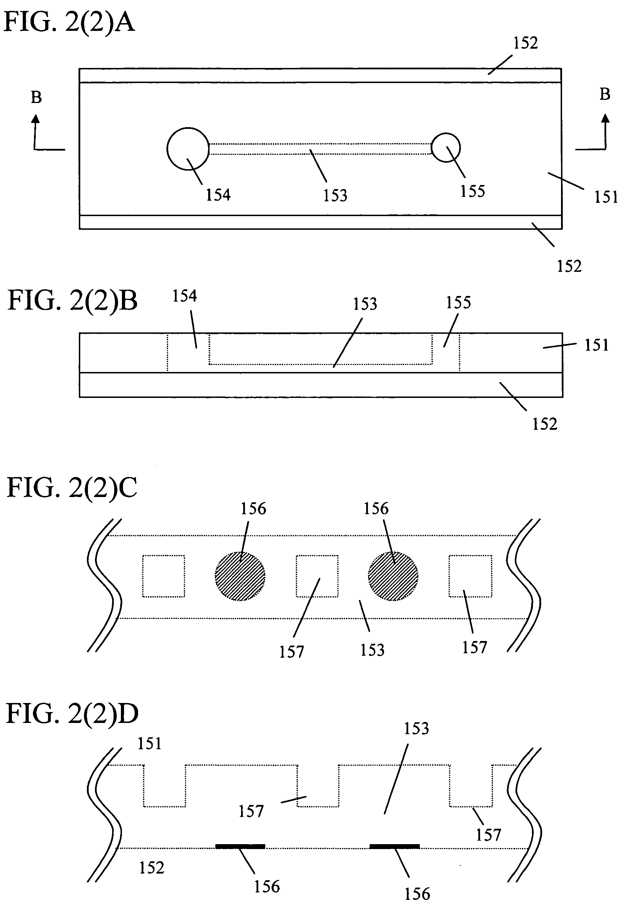

Figs. 2(1) A and 2(1)B are enlarged schematic views showing the bead array device, Fig. 2(1)A is a top view and Fig. 2(1)B is a cross-sectional view taken on line AA. The bead array device 102 is constructed of an upper portion 110 of the device, and a flat lower portion 111 of the device. Here, the description will be made of an example in which as the material of the upper portion 110 of the device, polydimethylsiloxane resin (PDMS) has been used and as the material of the lower portion 111 of the device, slide glass has been used. On a side on which the upper portion 110 of the device is in contact with the lower portion 111 of the device, there are provided holes (liquid reservoirs) 114 and 115 for holding the liquid with the bead array portion in which beads 113 have been arranged within the fluid path 112 as a center. The bead array device 102 having this structure can be fabricated by sticking the upper portion 110 of the device, which upper portion is made of PDMS and formed using a mold, to the lower portion 111 of the chip, which is slide glass.

The mold for taking the die to be used here can be fabricated using a photolithography technique in which a mask has been used for a resist flatly coated like a method described in, for example, Electrophoresis, 22, 328 to 333 (2001). In order to arrange the bead 113 on a flow path 112 portion after the upper portion 110 of the device is stuck on the lower portion 111 of the device, it can be performed using capillary vacuum tweezers as described in, for example, Analytical Chemistry, 75(13), 3250 to 3255 (2003). On the bead 113, DNA or antibody is fixed as a probe in advance, and when the liquid is passing through in the vicinity of the bead 113 arranged on the flow path 112, it is arranged in advance such that the nucleic acid and antigen in the liquid are caught. The nucleic acid and antigen thus caught can be measured by fluorescent measurement, and amounts of the nucleic acid and antigen in the liquid can be known from the fluorescence intensity obtained by measuring. As regards structure of the bead array in which the beads 113 have been arranged within the flow path 112, there has been detailed description in JP-A No. 243997/1999, and any structure may be adopted. As a feature of this bead array device 102, it has been described in Analytical Chemistry, 75(13), 3079-3085 (2003) that the efficiency of reaction on a solid-liquid interface is raised by transversely moving the liquid a number of times.

Although in the present example, there has been described an example in which the bead array device has been used, another chemical reaction device can be also used as a matter of course. Such a chemical reaction device as shown in, for example, Figs. 2(2) A to 2(2)D, can be used. In Figs. 2(2)A to 2(2)B, Fig. 2(2)A is a top view showing an example of a DNA measuring device having a chip shape as a whole, and Fig. 2(2)B is a cross-sectional view taken on line BB thereof. This device is constructed by sticking a PDMS substrate 151 having a flow path 153, which serves as a chemical reaction portion and a measuring portion, on flat slide glass 152. For the slide glass 152, a non-fluorescent one made of crown glass has been used. The PDMS substrate 151 has thickness of about 2 mm, and covers the slide glass 152 leaving a portion of about 2 mm toward the inside from the long side of the slide glass 152. A solution hole 154 and a connecting hole 155 have been constructed at both ends of the flow path 153. As regards fabrication of this device, as described in, for example, Electrophoresis, 22, 328-33 (2001), unreacted PDMS is flowed into a mold which serves as a die for a PDMS portion which has been made using the photolithography technique, for curing, and the PDMS substrate 151 cured is removed from the mold, and is stuck on the slide glass 152.

Figs. 2(2)C and 2(2)D are enlarged schematic views for one portion of the flow path 153 which serves as the chemical reaction portion and measuring portion shown in Figs. 2(2)A and 2(2)B, and Fig. 2(2)C is a top view and Fig. 2(2)D is a side view. The flow path 153 is constructed between the PDMS substrate 151 and the slide glass 152. The PDMS substrate 151 has projections 157, and these projections 157 project into the flow path 153 from the upper side of the flow path 153. These projections 157 have an effect for improving actual diffusion speed of the matrix by disturbing a flow of the reaction solution. On the slide glass 152 side of the flow path 153, DNA probes 156 for measuring the DNA have been spotted. The spotting of these DNA probes on the slide glass 152 is performed before the PDMS substrate 151 is stuck.

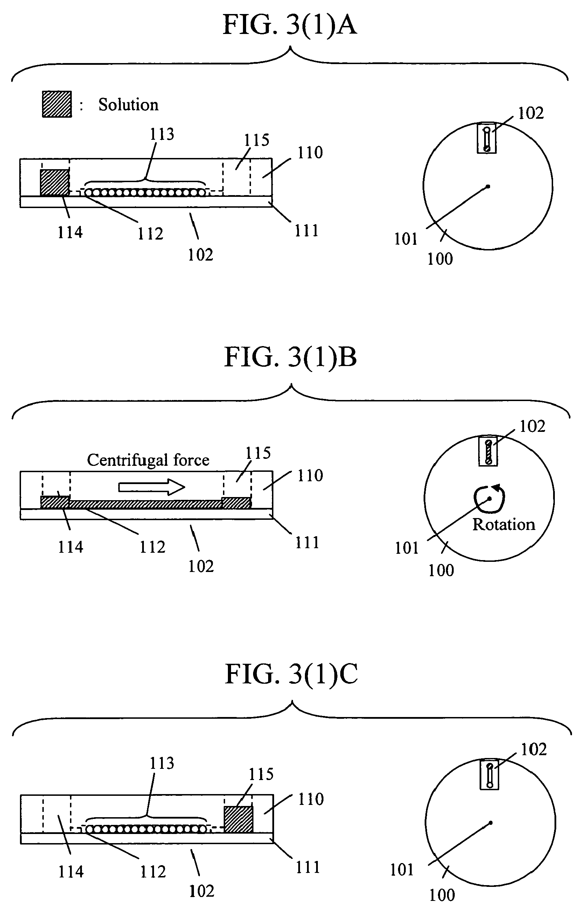

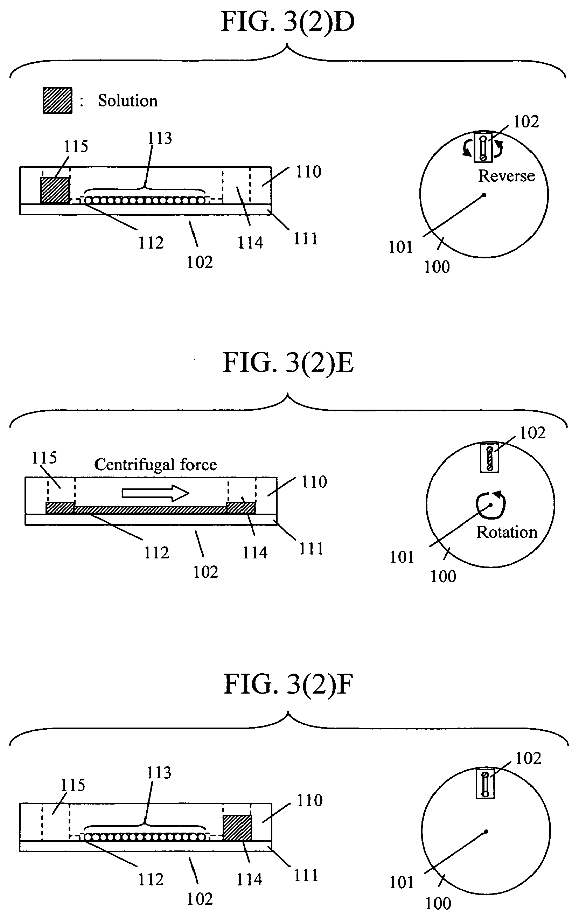

Figs. 3(1)A to C and Figs. 3(2)D to F are schematic views illustrating a procedure of liquid movement according to a first example of the present invention, showing an enlarged view and an entire bird's-eye view of the bead array device 102 together which is a chemical reaction device.

First, as shown in Fig. 3(1)A, setting is performed such that in a state in which the turntable 100 and the bead array device 102 remain at rest, a hole 114 for holding the liquid is on the rotating shaft 101 side, and an opposite hole 115 for holding the liquid is located on the outer peripheral side of the turntable. Then, solution is put into the hole 114 for holding the liquid on the rotating shaft side. Although we do not care about a method for putting the solution in, we introduced using a pipet here. This solution contains a reaction substance for reacting on the bead 113, a substance targeted for detection or washing solution and the like after the reaction. Next, as shown in Fig. 3(1)B, the turntable 100 is rotated with the rotating shaft 101 as a center. This rotation causes a centrifugal force to be exerted on the bead array device 102, and the solution that has been in the hole 114 for holding the liquid flows through the flow path 112 while making a contact with the bead 113, and is moved into the hole 115 for holding the liquid. In this case, as shown in Fig. 3(1)C, after the liquid is completely moved from the hole 114 for holding the liquid into the hole 115 for holding the liquid, the rotation of the turntable 100 is stopped. In this stage, a process in which the liquid is moved in one direction is completed.

Next, in order to perform transverse liquid movement, the bead array device 102 is reversed as shown in Fig. 3(2)D. An example of a mechanism for reversing will be described later. This reversion is to locate a hole 115 for holding liquid containing solution on the rotating shaft 101 side, and to locate a hole 114 for containing no liquid on the outer periphery side of the turntable 100. Although this state is substantially similar to the state of Fig. 3(1)A, the positional relationship between the holes 114 and 115 holding the liquid has been reversed. Later, by repeating the substantially same process as the first liquid movement, the solution is moved throughout the flow path 112 backward. As shown in Fig. 3(2)(e), the turntable 100 is rotated with the rotating shaft 101 as a center. This rotation causes a centrifugal force to exert on the bead array device 102, the solution that has been in the hole 115 for holding the liquid flows through the flow path 112 while being in contact with the bead 113, and is moved into the hole 114 for holding the liquid. In this case, as shown in Fig. 3(2)F, after the liquid is completely moved from the hole 115 for holding the liquid into the hole 114 for holding the liquid, the rotation of the turntable 100 is stopped. At this stage, a process in which the transverse liquid movement is once performed is completed. Since in order to repeat the transverse liquid movement, it is necessary to return to the first arrangement, the bead array device 102 is reversed to thereby return to the state shown in Fig. 3(1 )A. Hereinafter, the similar process is repeated, whereby the solution can be moved transversely through the flow path 112 between the holes 114 and 115 for holding the liquid. In this respect, on reversing the bead array device 102, it is not always necessary to stop the rotation of the turntable 100. It may be possible to reverse the bead array device 102 on the turntable 100 while continuously rotating the turntable 100.

Since when passing through in the vicinity of the surface of the bead 113, the nucleic acid and antigen in the liquid are caught by DNA and an antibody as a fixed probe, the liquid is moved transversely through the flow path 112, whereby an efficiency of the reaction between the nucleic acid and antigen in the liquid and the probe on the surface of the bead 113 can be raised. Also, when washing with the liquid, washing can be also performed effectively likewise. Since there is no possibility that an external apparatus or external piping comes into direct contact with the liquid during these operations, it is possible to realize a liquid movement method of the chemical reaction device or the chemical reaction apparatus, which is quite free from any contamination occurring.

Also, in a liquid movement method according to the present example, since there does not exist any air gap which is frequently used when a conventional syringe pump is used, no air bubbles resulting from the air gap evolve. Also, since the liquid is moved only by pressurization due to the centrifugal force and there exists no process for generating any negative pressure, there is no possibility that a negative pressure of the atmospheric pressure or less is applied to the solution and gas that has been solved into the solution develops into air bubbles. In the conventional method, these air bubbles stick to a surface on which molecules relating to the reaction have been fixed, for example, the surface of the bead to thereby deteriorate the efficiency of the chemical reaction and to exert an adverse effect on the reproducibility. According to a liquid movement method of the present example, since no air bubbles evolve, no effect due to air bubbles will be exerted, but high chemical reaction efficiency can be obtained, and the reproducibility of the reaction is also improved.

In the present example and subsequent examples, examples in which the bead array device 102 has been used are covered, and the scope of application of the present invention is not limited thereto, but the present invention is applicable to most chemical reaction devices associated with movement of fluid. Particularly, since transverse liquid movement is possible, there are advantages that it becomes possible to improve the reaction efficiency, to shorten the reaction time period, to improve the analysis sensitivity, and to reduce a necessary amount of sample solution. In this chemical reaction device, there are included a chemical reaction device in which on the wall surface of, for example, a flow path, there is provided an obstruction to cause a turbulent flow and a chemical reaction is performed in a short time period, and a chemical reaction device in which magnetic fine particles are arranged in a flow path and the magnetic fine particles are operated by an external magnet.

A centrifugal force to be generated by rotating the turntable exerts pressure on the solution within the flow path, whereby the solution is moved within these chemical reaction devices. When a direction of the flow path coincides with that of the centrifugal force, this pressure P can be approximately expressed as P = (ρVrω²)/A. where ρ is density of the solution,
V is volume of the solution, r is a distance between the rotating shaft and a center of the flow path, ω is angular rotating speed of the turntable, and A is a cross-sectional area of the flow path. A flow rate of the liquid to be moved is determined by this pressure and flow path resistance of the flow path. As regards most of the chemical reaction devices in which the bead array device is taken as an example, when particularly biomolecules are handled by these devices, s capacity of 10 µL or about 100 µL is frequently handled. As the liquid movement speed, there can be a volume flow rate of 10 µL or about 100 µL per minute respectively.

In the bead array device 102 shown in, for example, Figs. 2(1)A and B, width of the flow path 112 is assumed to be 150 µm, size of the bead 113, 100 µm, and a number of the beads to be 100 pieces respectively. When flow path resistance when 10,000 pieces of beads are arranged is actually measured and is converted to a value for 100 pieces of beads, a pressure difference necessary to flow water of 10 µL per minute was found to be 0.176 kgf/cm². When assuming volume of the solution to be 10 µL, volume flow rate of the solution to be 10 µL per minute, a distance between the rotating shaft and a center of the flow path to be 80 mm, and the rotating speed to 1 revolution per second, the pressure is calculated from the previous calculation formula, it becomes 0.182 kgf/cm², and is substantially equal to the necessary pressure difference. Also, a necessary pressure difference when water of 100 µL per minute similarly is flowed was 0.26 kgf/cm². When assuming volume of the solution to be 100 µL, volume flow rate of the solution to be 100 µL per minute, a distance between the rotating shaft and a center of the flow path to be 120 mm, and the rotating speed to 1 revolution per second, the pressure is calculated from the previous calculation formula, it becomes 0.27 kgf/cm², and is substantially equal to the necessary pressure difference. In other words, rotation is made under these conditions, whereby volume and volume flow rate of reaction solution necessary for the bead array device can be handled in liquid movement transverses. Since pressure loss due to any other portions than the beads is sufficiently small, the liquid movement operation can be performed under these conditions. For example, the distance between the rotating shaft and the center of the flow path of 150 mm or less is sufficient even though the size of the chemical reaction device is taken into consideration from the previous calculation.

Also, as regards rotating speed of the turntable, it is necessary for the liquid not to overflow the liquid reservoir, and it is further preferable if it is within such a range as not to require any lid at this time. A liquid level of the solution has an angle of 45 degrees within the liquid reservoir after the liquid is fed by, for example, a centrifugal force when a balance between the centrifugal force and the gravitational force is struck, and the liquid will not overflow in this case. When of the cases calculated previously, considered in cases of a radius of 80 mm and a radius of 120 mm, it can be seen that this condition is satisfied at about 2 revolutions per second or less. In liquid movement transverses by this method, such a small rotating device is sufficient, and since a low rotating speed is sufficient, it is possible to construct a simple and low-priced device. Here, the bead array device has been studied by actually measuring the flow path resistance, but most of any other chemical reaction devices than this has low flow path resistance, and there is actually no problem if the conditions of the bead array device are met.

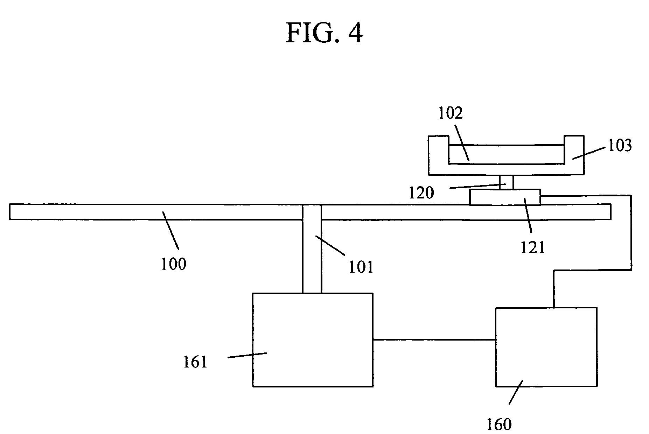

Fig. 4 is a schematic view for an example of a mechanism for rotating a chemical reaction device according to a first example of the present invention, showing an outline of a mechanism for rotating a bead array 102, which is one of the chemical reaction device, which has been omitted in Fig. 1.

The bead array device 102 has been held by a device holding portion 103, and the device holding portion 103 has been held by a rotating shaft 120 of the device holding portion. The rotating shaft 120 of the device holding portion is connected to a motor 121 installed on a turntable 100. The motor 121 is rotated, whereby the rotating shaft 120 of the device holding portion is rotated, and as a result, the bead array device 102 can be rotated. The bead array device 102 shown in Fig. 3(2)D can be reversed by the mechanism of Fig. 4.

The turntable 100 is rotationally driven by a motor 161. Also, the motor 121 and the motor 161 are controlled by an apparatus control unit 160. The apparatus control unit 160 drives the motor 161 to rotate the turntable 100, and exerts a centrifugal force on the bead array device 102 held by the device holding portion 103 to move reaction solution in one liquid reservoir toward the other liquid reservoir through the flow path 112. A time period during which reaction solution which has been in the liquid reservoir closer to the rotating shaft 101 of the turntable 100 is completely moved to a liquid reservoir far from the rotating shaft 101 by liquid movement by the centrifugal force is determined by calculation or by experiment in advance, and is set to a timer of the apparatus control unit 160 in advance. The apparatus control unit 160 drives the motor 121 in response to a timing signal to be transmitted from the timer, and repeats control for reversing the device holding portion 103 a preset number of times, whereby the reaction solution is fed transverses through the flow path 112 of the bead array device 102. In place of the time control using the timer, an operation for reversing the device holding portion 103 may be repeated every time a number of times of rotations of the turntable reaches a preset number of times.

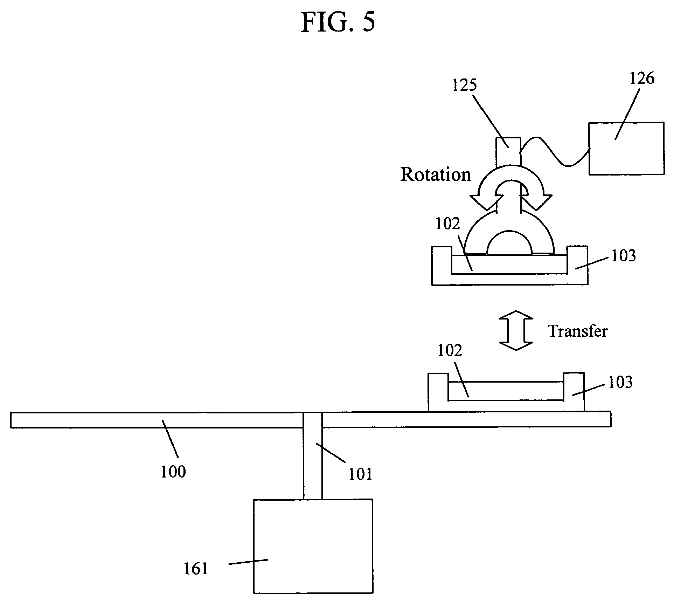

The mechanism for rotating the device holding portion 103 is not limited to the motor, but there are conceivable various methods such as a method for combining gear and torsional screw or method for using positioning due to spiral spring and machine origin. Also, it does not necessarily follow that the mechanism for rotating this chemical reaction device is attached to the turntable 100. For example, it may be possible to adopt an operation and an operating mechanism from the outside such that the rotation of the turntable 100 is stopped after moving liquid in one direction, the chemical reaction device is mechanically removed from above the turntable 100 and the device is reversed for setting. There can be also adopted a mechanism in which as shown in, for example, Fig. 5, an arm 125 for rotating the device is installed in the outside of the turntable 100, the arm 125 for rotating the device grips, moves and reverses the bead array device 102 and the device holding portion 103, and installs them on the turntable 100 in the direction reversed.

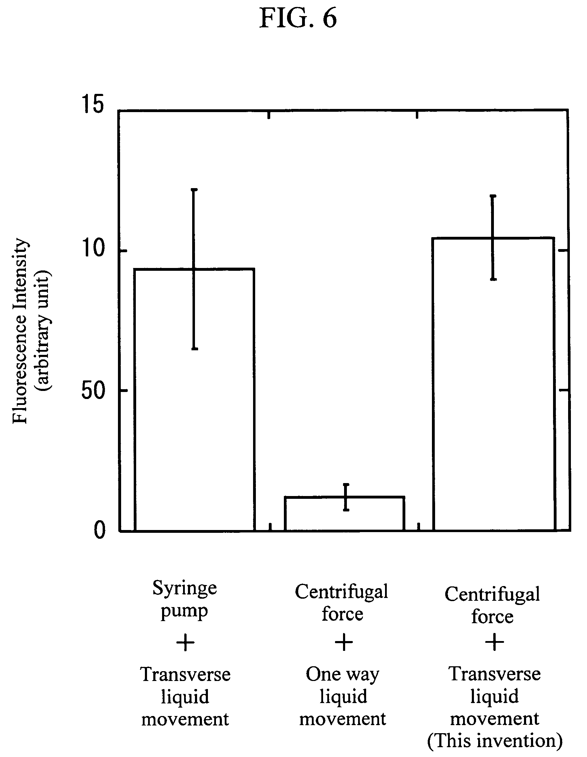

Fig. 6 shows that the chemical reaction device according to the first example of the present invention is bead array, and comparisons between the result obtained by detecting hybridization with the bead array and a result obtained by a conventional method. As a DNA probe, there has been prepared synthetic DNA of 18 base length having one portion of base sequence on the anti sense side of each exon (however, exon 1 and 3 are not used, but 10 types in total. Probes 1 to 10) of p53. Target DNA is completely complementary with DNA probe 5, and synthetic DNA (DNA target 5) of 18 base length labeled with Texas Red fluorescent material has been prepared. Melting temperature between the complementary DNA probe and the target DNA was about 70°C. The sequences are shown below

These DNA probes have been fixed to glass bead with diameter of 103 µm by a method similar to Nucleic Acids Research, 30(16), e87(2002), and have been arranged one by one in order on the bead array device shown in Figs. 2(1)A and B. In this bead array device, 4xSSC-0.1%SDS solution 10 µL of 1 x 10⁻¹⁰M concentration of the DNA target 5 has been caused to perform hybridization reaction by three methods. In a first case, using the conventional method using the syringe pump, it has been fed transverses three times for six minutes for reaction. In a second case, using the centrifugal method explained in the present example, liquid movement in one direction only has been performed without reversing a direction of the device. In this case, the operation has been made such that solution of 10 µL flows for 30 seconds in this liquid movement once. In a third case, using the centrifugal method explained in the present example, the operation has been performed on condition that liquid is fed transverses three times for six minutes by reversing the direction of the device. After the hybridization reaction, it has been washed in the order of 1 x SSC-0.03%SDS solution, 0.2 x SSC solution, 0.05 x SSC solution, and water, and it has been measured with a fluorescence microscope with a CCD camera. As fluorescence intensity, intensity obtained by numerically expressing fluorescence intensity of a glass bead to which DNA probe 5 corresponding to the DNA target 5 has been fixed from an image of the CCD camera has been used. The experiment has been made seven times concerning the respective conditions, and the average and standard deviation have been calculated.

An error bar of each bar graph shown in Fig. 6 corresponds to the standard deviation. According to this error bar, in the case of liquid movement transverses using the syringe pump, higher fluorescence intensity is obtained than liquid movement one way by the centrifugal liquid movement, and it can be seen that a result of liquid movement transverses by the centrifugal liquid movement according to the present invention is a little higher in fluorescence intensity and is smaller in error bar. This is because in the liquid movement method according to the present invention, there exists no air gap, nor is there any process for causing any negative pressure, and therefore, both air bubbles resulting from the air gap and air bubbles into which gas solved in the solution develops by the negative pressure are suppressed. For this reason, according to the liquid movement method of the present invention, since air bubbles stick to the surface of the bead and do not inhibit the reaction, it is considered that a uniform reaction having high reproducibility has been realized.

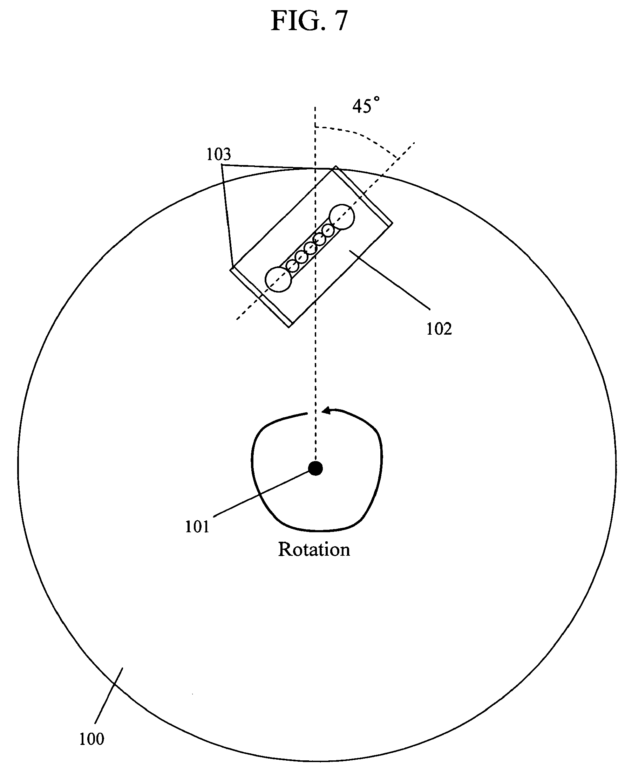

Fig. 7 is a schematic view showing an example when a direction of a flow path of a chemical reaction device according to a first example of the present invention and a segment of a line for connecting the chemical reaction device to a center of the turntable do not coincide with each other, but have a significant angle. In this example, unlike a case of the schematic view shown in Fig. 1, a direction of a flow path of the bead array device 102 and a segment of a line for connecting the bead array device 102 to the rotating shaft 101 of the turntable 100 do not coincide with each other, but incline, having an angle of 45°. By using the rotating mechanism of the device shown in, for example, Fig. 4, this state can be realized.

A centrifugal force acting on liquid movement of solution acts from the rotating shaft 101 of the turntable 100 toward the bead array device 102. When the direction of the flow path coincides with a direction in which the centrifugal force acts as shown in Fig. 1, magnitude of pressure acting on the solution resulting from this centrifugal force is assumed to be P1. Assuming an angle between the flow path of the bead array device 102 and a direction of this centrifugal force to be θ, θ is 45° in the condition expressed by this Fig. 7. Magnitude of a force P2 acting on liquid movement of solution in this inclined case can be expressed as P2 = P1 × cosθ. Since the force acting on the solution can be controlled by controlling this angle, there is an effect that the liquid movement speed can be controlled as a result. Control of the liquid movement speed is important because it affects the efficiency of chemical reaction to a large extent. Also, it becomes possible to set liquid movement condition corresponding to type of the solution, reaction condition, and washing condition. Also, since a force acts on the solution and liquid can be moved in any other directions than perpendicular to the direction of the centrifugal force, it will be possible to move the liquid transversely if the angle is a little changed lying astride the right angle, and the rotating mechanism of the chemical reaction device will be able to be simplified.

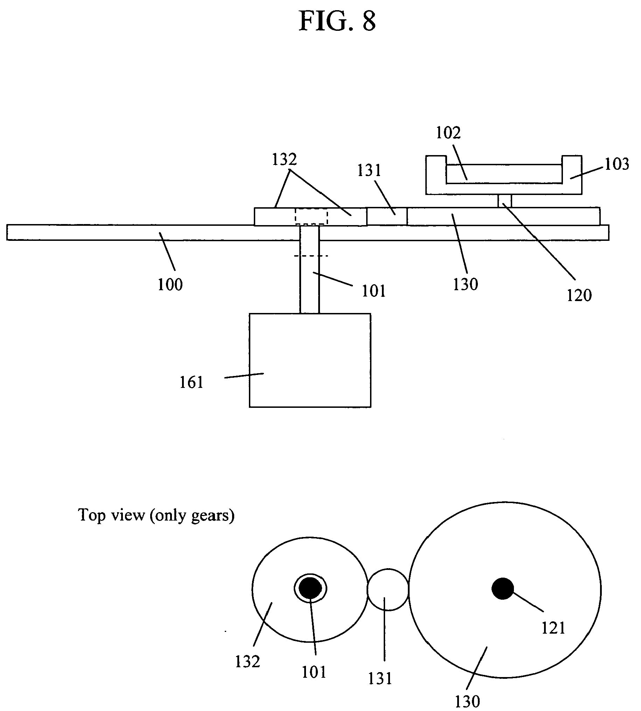

Fig. 8 is a schematic view showing another example of a mechanism for rotating the chemical reaction device in the first example of the present invention. Although in the example shown in Fig. 4, the motor is directly used to rotate the bead array device 102, in the example shown in Fig. 8, a combination of gears is used.

The bead array device 102 has been held by a device holding portion 103, and the device holding portion 103 has been held by a rotating shaft 120 of the device holding portion. The rotating shaft 120 of the device holding portion is connected to a gear 130 for rotating the device installed on a turntable 100.
The gear 130 for rotating the device is connected to a gear 131 and a gear 132 in order. The gears 130, 131, 132 are rotatively installed on the turntable. Also, the gear 132 is relatively fixed in position with respect to the outside of the turntable not clearly shown in this figure. In this structure, the turntable 100 is rotated around the rotating shaft 101, whereby the gear 132 relatively rotates to the turntable 100, and the rotation is transmitted to the gear 131 to rotate the gear 130 for rotating the device. As a result, as the turntable 100 is rotated, the bead array device 102 is to rotate at the same time.

A ratio of numbers of revolutions of the turntable 100 to the bead array device 102 is determined by setting a gear ratio of the gears 130, 131 and 132, and by designing adequately, the solution within the bead array device 102 can be fed transverses by this mechanism. For example, the bead array device 102 is installed such that the direction of the fluid path coincides with the direction of the centrifugal force as shown in Fig. 1, the rotary speed of the turntable 100 is fixed to rotate it, and a time period t for passing through completely in one direction is measured in advance. As regards setting the gear ratio, if setting is made such that a time period necessary for rotating the bead array device 102 by 180° is sufficiently longer than t x the ratio of the circumference of a circle to its diameter, the flow path of the bead array device 102 will be actually reversed after the solution is completely fed in one way.

When a rotary mechanism of the chemical reaction device using this gear has been used, there is an advantage that there is no need for a troublesome procedure for reversing the direction every time the liquid movement one way is completed, but the liquid movement transverses can be realized by a simple mechanism for only rotating the turntable 100. Also, any time period relating to acceleration and deceleration during rotation of the turntable 100 will become unnecessary, and it is also possible to shorten an actual time period for the chemical reaction to be performed using liquid movement transverses and the washing process.

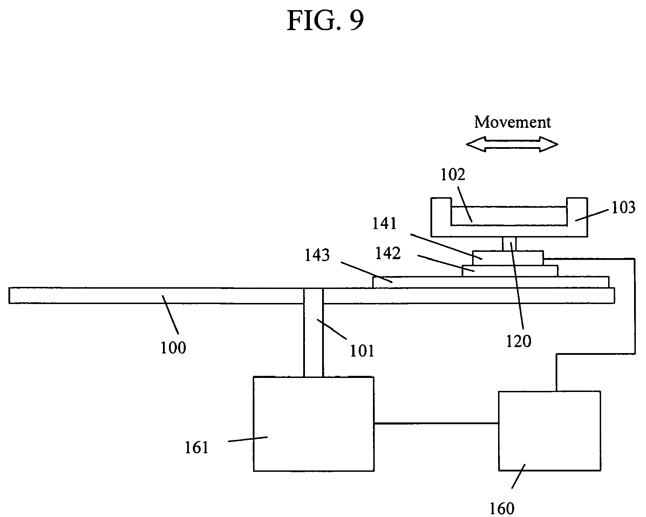

Fig. 9 is a schematic view for representing an example of a mechanism for changing a distance between the chemical reaction device and the center of the turntable in the first example of the present invention. The bead array device 102 has been held by a device holding portion 103, and the device holding portion 103 has been held by a rotating shaft 120 of the device holding portion. The rotating shaft 120 of the device holding portion is connected to a motor 141. The motor 141 is rotated, whereby the rotating shaft 120 of the device holding portion is rotated, and as a result, the bead array device 102 can be rotated. The turntable 100 is rotationally driven by a motor 161. Also, the motor 141 and the motor 161 are controlled by a apparatus control unit 160. The motor 141 is held on a motor holding stand 142, and the motor holding stand 142 is installed on rails 143. On the rails 143, the motor holding stand 142 can be moved, and as a result, the distance between the bead array device 102 and the rotating shaft 101 of the turntable 100 can be changed. According to this mechanism, it is possible to operate by making changing the distance between the bead array device 102, which is one of the chemical reaction devices, and the rotating shaft 101 of the turntable 100, and rotating or reversing the bead array device 102 compatible.

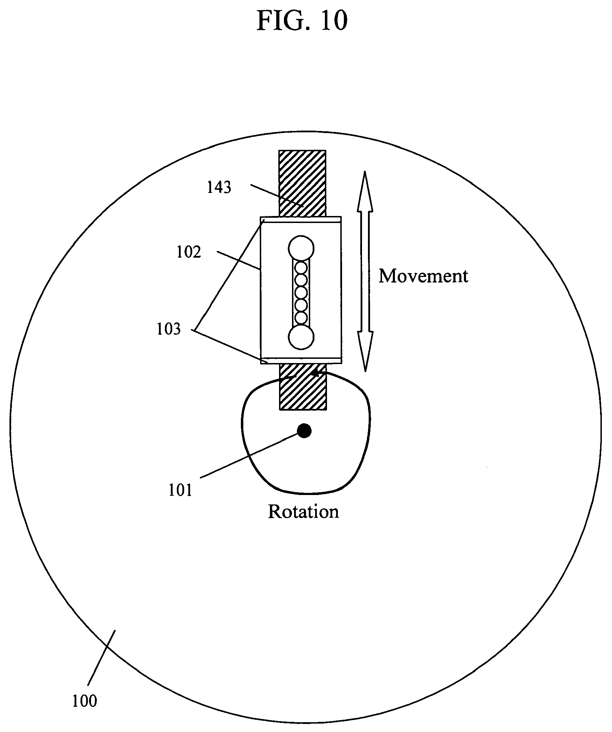

Fig. 10 is a schematic top view showing a state in which the distance between the bead array device 102 shown in Fig. 9 and the rotating shaft 101 is changed. The rail 143 has been installed so as to extend from the rotating shaft 101, which is a center of the turntable 100, linearly on the radius toward the outer periphery, and on the rail 143, the bead array device 102 on the device holding portion 103 to be supported via the motor holding stand, the motor, and the rotating shaft of the device holding portion, which are not clearly shown here, is capable of moving. Since a centrifugal force F acting on the solution within the bead array device 102 becomes higher in proportion to a distance r from the rotating shaft 101, there is an advantage that by changing this distance r, the centrifugal force acting on the solution is changed, and as a result, the liquid movement speed of the solution can be changed. Control of the liquid movement speed is important because it affects the efficiency of chemical reaction to a large extent. By changing the distance r, it becomes possible to set liquid movement condition corresponding to type of the solution, reaction condition, and washing condition.

Although in Figs. 9 and 10, a mechanism using the rail has been taken as an example, and explained, the mechanism for changing the distance r is not limited thereto. There is conceivable a mechanism in which for example, on the underside of the bead array device 102, there is provided a convex portion, and at places corresponding to various distances r on the upper surface of the turntable 100, there is provided a concave portion for holding and supporting the convex portion. Also, as regards the rotating mechanism for the chemical reaction device to be adopted at the same time at this time, the present invention is not limited to a mechanism using the motor.

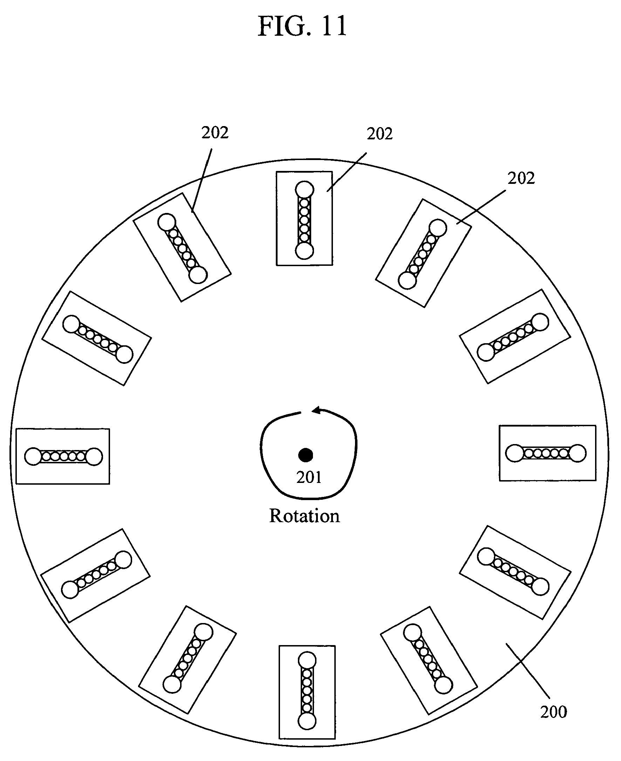

Fig. 11 is a schematic view showing a second example of the present invention as a whole. Unlike the first example explained in Fig. 1, a plurality of chemical reaction devices are mounted on the turntable to move liquid at the same time.

In this example, on the turntable 200 which rotates with the rotating shaft 201 as a center, 12 pieces of bead array devices 202 have been installed. It is possible to rotate the respective bead array devices 202 by a mechanism similar to the first example of the present invention, and to move the solution transversely to each of them. Due to this mechanism, it becomes possible to operate a plurality of bead array devices 202 at the same time, and there is an advantage that entire operating time can be shortened and the entire operating cost can be reduced.

Even in this mechanism on which a plurality of bead array devices 202 have been mounted, as explained in the first sample of the present invention, it is possible to adopt a mechanism for changing a distance between the rotating shaft 201 and the bead array device 202, or to adopt a mechanism for changing an angle of the bead array device 202, and as a result, there is an effect that it becomes possible to control the liquid movement condition, and to set a liquid movement condition corresponding to type of the solution, reaction condition, and washing condition.

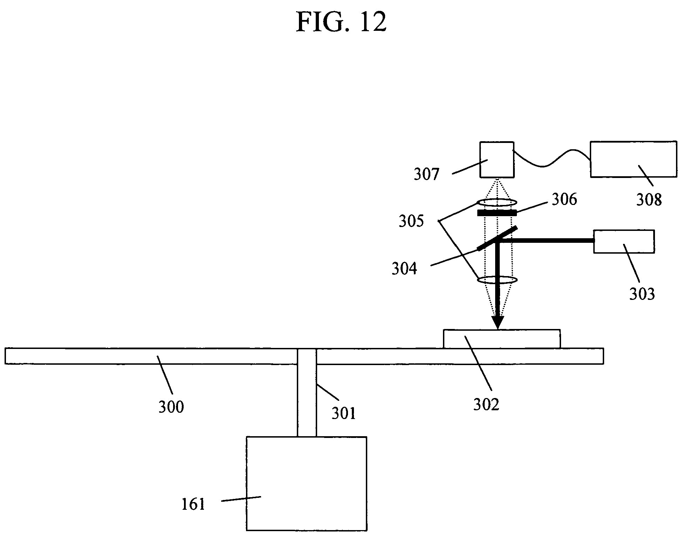

Fig. 12 is a schematic view showing a third example of the present invention as a whole. This is an example, different from the first example explained in Fig. 1, in which liquid movement and measurement are performed at the same time by incorporating a measuring device at the same time.

In this example, on the turntable 300 which rotates with the rotating shaft 301 as a center, 12 pieces of bead array devices 302 have been installed. It is possible to rotate the respective bead array devices 302 by a mechanism similar to the first example of the present invention, and to move the solution transversely. Since fluorescent measurement is performed on the bead array device 302 from above it, laser light from a laser 303 is reflected by a dichroic mirror 304 to irradiate the bead array device 302. Fluorescence from the bead array device 302 passes through a lens 305, the dichroic mirror 304, and an optical filter 306 to be received by a photoelectric multiplier 307, and a signal from the photoelectric multiplier 307 is analyzed by a signal processing device 308, whereby the fluorescence can be measured.

When measuring after washing glass beads to which the DNA probe has been fixed using a method described in, for example, Nucleic Acids Research, 30(16), e87(2002) are arranged on a flow path of the bead array 302 and solution containing target DNA labeled with TexasRed is moved transversely for reaction, as the laser 303, a YAG laser can be used, and as the optical filter 306, there can be used a band pass filter having a half-amplitude level of about 30 nm with about 610 nm, which is light emitting wave length of TexasRed, as a center. The measurement can be performed after the rotation of the turntable 300 is stopped, and can be also performed while it is being rotated. Although the description has been made of a system for performing fluorescent measurement here, it is also possible to perform measurement such as chemical light emitting measurement, light absorbing measurement, and coloration measurement. By combining liquid movement transverses for the chemical reaction device with a measuring process, it is possible to shorten the entire operating time period and to reduce the cost. Also, since the in-progress can be measured, there is an advantage that liquid movement can be continued until an optimum chemical reaction or analysis result can be obtained.

## Claims

1. A chemical reaction apparatus, comprising:
a turntable (100);
a driving unit for rotationally driving said turntable (100);
a holding unit (103), provided on said turntable (100) at a position deviating from a rotating shaft (101), for holding a chemical reaction device (102) having a first liquid reservoir (114), a second liquid reservoir (115), and a flow path (112) connecting said first and second liquid reservoirs (114, 115); and
a mechanism for changing the direction of said holding unit (103).

2. A chemical reactor, comprising:
a turntable (100);
a chemical reaction device (102) having a first liquid reservoir (114), a second liquid reservoir (115), and a flow path (112) for connecting said first and second liquid reservoirs (114, 115);
a holding unit (103) for holding said chemical reaction device (102) on said turntable (100) at a position deviating from a rotating shaft (101); and
a mechanism for changing the direction of said holding unit (103).

3. The apparatus of claim 1 or 2, wherein said mechanism is a driving means for rotating said device holding unit (103).

4. The apparatus of claim 1 or 2, wherein said mechanism has a first gear (132) relatively fixed to the outside of said turntable (100), and a second gear (130) fixed on said turntable (100) and meshing with said first gear (132) to rotate said device holding unit (103).

5. The apparatus of claim 1 or 2, further comprising means for varying the distance of said device holding unit (103) relative to said rotating shaft (101).

6. The apparatus of claim 1 or 2, wherein the distance between said rotating shaft (101) and the center of said flow path (112) is 150 mm or less.

7. The apparatus of claim 1 or 2, further comprising means for changing the angle between said flow path (112) and a straight line connecting said rotating shaft (101) with said holding unit (103).

8. The apparatus of claim 1 or 2, further comprising a control unit for controlling said turntable driving unit and said mechanism so as to reverse the direction of said chemical reaction device (102) is repeated every time a preset time period has elapsed or every time said turntable (100) has rotated a predetermined number of times.

9. The apparatus of claim 1 or 2, further comprising a plurality of device holding units (103) on said turntable (100).

10. A liquid movement method, comprising:
introducing solution into a first liquid reservoir (114) of a chemical reaction device (102) having said first liquid reservoir (114), a second liquid reservoir (115) and a flow path (112) connecting said and second first liquid reservoirs (114, 115);
rotating a turntable (100) on which said chemical reaction device (102) is provided, and moving a solution from said first liquid reservoir (114) into said second liquid reservoir (115) through said flow path (112) by centrifugal force due to the rotation of said turntable (100);
rearranging said chemical reaction device (102) so as to actually reverse the direction of said flow path (112); and
moving the solution within said second liquid reservoir (115) by passing it through said flow path (112) in the reverse direction by centrifugal force due to the rotation of said turntable (100).

11. The method of claim 10, wherein said chemical reaction device (102) is a bead array in which granular beads (113) are arranged in said flow path (112).

12. The method of claim 10, wherein a nucleic probe is fixed on the surface of said beads (113).

13. The method of claim 10, wherein said chemical reaction device (102) has a reaction portion in which a substance which specifically reacts with a specific substance within said flow path (112) has been fixed.

14. The method of claim 10, wherein a process of rearranging said chemical reaction device (102) is repeated every time a preset time period has elapsed or every time said turntable (100) has rotated a predetermined number of times.

15. The invention of any one of claims 1, 2 and 10, wherein the rotary speed of said turntable (100) is 2 revolutions per second or less.

## Amended claims

### Amended claims in accordance with Rule 86(2) EPC.

**1.** A chemical reaction apparatus, comprising:
a turntable (100);
a driving unit for rotationally driving said turntable (100);
a holding unit (103), provided on said turntable (100) at a position deviating from a rotating shaft (101), for holding a chemical reaction device (102) having a first liquid reservoir (114), a second liquid reservoir (115), and a flow path (112) connecting said first and second liquid reservoirs (114, 115); and
a mechanism for changing the direction of said holding unit (103),
wherein a liquid positioned in said flow path (112) of said reaction device (102) is caused to be delivered in a reciprocating manner as the direction of said device holding unit (103) is changed by said mechanism for changing the direction of said device holding unit.

**2.** A chemical reactor, comprising:
a turntable (100);
a chemical reaction device (102) having a first liquid reservoir (114), a second liquid reservoir (115), and a flow path (112) for connecting said first and second liquid reservoirs (114, 115);
a holding unit (103) for holding said chemical reaction device (102) on said turntable (100) at a position deviating from a rotating shaft (101); and
a mechanism for changing the direction of said holding unit (103),
wherein a liquid positioned in said flow path (112) of said reaction device (102) is caused to be delivered in a reciprocating manner as the direction of said device holding unit (103) is changed by said mechanism for changing the direction of said device holding unit.
